# EUROPÄISCHE PATENTANMELDUNG

(11) **EP 1 156 504 A2**
(43) Veröffentlichungstag der Anmeldung: **21.11.2001**
(21) Anmeldenummer: 00121231.5
(22) Anmeldetag: 29.09.2000
(51) Int. Cl.: H01H 59/00

(54) **Mikromechanisches Relais mit verbessertem Schaltverhalten**

(30) Priorität: 16.05.2000 DE 10023564
(71) Anmelder: Fraunhofer-Gesellschaft zur Förderung der angewandten Forschung e.V., 80363 München (DE)
(72) Erfinder: Faul, Robert, 80639 München (DE); Drost, Andreas, 82178 Puchheim (DE); Pradel, Helmut, 86571 Langenmosen (DE)
(74) Vertreter: Gagel, Roland, Dr.

(57) **Zusammenfassung**

Die vorliegende Erfindung betrifft ein mikromechanisches Relais mit verbesserten Schalteigenschaften, bei dem der Kontaktbügel zur Überbrückung eines Schaltkontaktes beabstandet vom freien Ende eines einseitig eingespannten, mikromechanischen, beweglichen Biegebalkenelementes an diesem angeordnet ist. Beidseitig des Kontaktbügels sind am beweglichen Element Steuerelektroden vorgesehen, die in Zusammenwirkung mit gegenüberliegenden Steuerelektroden am Substrat sowie entsprechenden Steuersignalen das Öffnen und Schließen des Kontaktes bewirken.

Sowohl durch die beidseitige Anordnung der Steuerelektrodengebiete als auch die erweiterten und beispielsweise getrennten Ansteuerungsmöglichkeiten der Steuerelektroden beidseitig des Kontaktbügels bzw. der entsprechenden Steuerelektroden am Substrat lässt sich ein verbessertes Schaltverhalten erzielen.

## Beschreibung

### Technisches Anwendungsgebiet

Die vorliegende Erfindung bezieht sich auf ein mikromechanisches Relais mit zumindest einem auf einem Substrat angeordneten Bodenelektrodengebiet, einem über ein Verbindungselement mit dem Substrat verbundenen beweglichen Element sowie zwei über einen Spalt voneinander beabstandeten Kontaktflächen auf dem Substrat. Das bewegliche Element weist ein freistehendes Ende, ein Gegenelektrodengebiet und zumindest einen elektrisch leitfähigen Kontaktbügel auf, wobei das Gegenelektrodengebiet in einem Bereich zwischen dem Verbindungselement und dem Kontaktbügel ausgebildet ist. Die Elektrodengebiete, das bewegliche Element und der Kontaktbügel sind bei einem derartigen mikromechanischen Relais so angeordnet, dass sich Boden- und Gegenelektrodengebiete gegenüberliegen und das bewegliche Element mit dem Kontaktbügel bei Anlegen einer elektrischen Spannung zwischen Boden- und Gegenelektrodengebieten in Richtung der Bodenelektrode bewegt wird, wodurch der Kontaktbügel auf die Kontaktflächen gedrückt wird und so eine elektrische Verbindung zwischen den Kontaktflächen herstellt.

Mikromechanische Relais zum Schalten von elektrischen Strömen sind für eine Vielzahl von technischen Anwendungsfeldern von Bedeutung. Durch Anwendung von Kenntnissen und technologischen Prinzipien der Mikromechanik und Mikromechatronik-Prozesstechnik können in jüngerer Zeit mikromechanische Relais realisiert werden, deren Flächenabmessungen im Sub-Millimeter-Bereich liegen. Derart miniaturisierte Relais zeigen sehr vorteilhafte Eigenschaften bezüglich der Schaltgeschwindigkeit und dem Schaltverhalten. So lassen sich Schaltzeiten im Mikrosekunden-Bereich und ein annähernd prellfreies Schaltverhalten erzielen. Diese Mikrorelais arbeiten in der Regel nach dem elektrostatischen Antriebsprinzip und werden durch Anlegen einer elektrischen Spannung zwischen einer festen Boden- und einer beweglichen Gegenelektrode betätigt. Die bewegliche Gegenelektrode, die in Form einer mikromechanischen Struktur ausgebildet ist, ändert ihre Position relativ zur festen Bodenelektrode aufgrund der einwirkenden elektrostatischen Kraft. Über ein an der beweglichen Gegenelektrode befestigtes Kontaktelement, im Folgenden als Kontaktbügel bezeichnet, kann ein Abstand zwischen zwei Kontakten elektrisch überbrückt und der Kontakt somit geschlossen werden. Auf diesem Funktionsprinzip basierende mikromechanische Relais lassen sich nahezu leistungslos schalten. Darüberhinaus liegen die Kontaktkapazitäten aufgrund der geringen Abmessungen der Elemente im fF-Bereich. Dieser äußerst geringe Wert führt zu einem ausgeprägten Isolationsvermögen des Relais bei geöffnetem Kontakt, so dass das Überkoppeln von Signalen vom Steuerkreis für Boden- und Gegenelektroden in den Schaltkreis oder umgekehrt auch noch bei sehr hohen Schaltfrequenzen ausreichend gedämpft wird. Ebenso ist die geringe Kontaktkapazität vorteilhaft für hohe HF-Dämpfungswerte im Schaltkreis bei geöffnetem Relaisschaltzustand. Mikromechanische Relais können daher auch noch im Gigahertz-Bereich eingesetzt werden und eignen sich besonders für Anwendungen in der Hochfrequenztechnik.

### Stand der Technik

Ein gattungsgemäßes mikromechanisches Relais ist beispielsweise aus der DE 196 46 667 bekannt. Bei diesem Relais wird das Schaltverhalten dadurch vorteilhaft beeinflusst, dass der Kontaktbügel mit einer Druckspannungsschicht versehen wird. Diese Druckspannungsschicht bewirkt eine Auslenkung bzw. Auswölbung des Kontaktbügels nach unten, d.h. zu den Kontaktflächen hin. Bei Berührung mit den Kontaktflächen durch Anlegen einer entsprechenden elektrischen Spannung zwischen Boden- und Gegenelektrode verformt sich der Kontaktbügel im Bereich der Kontaktflächen, so dass ein besserer und zuverlässiger Kontakt hergestellt wird. Weiterhin wird durch die hierbei im Kontaktbügel gespeicherte Verformungsenergie das nachfolgende Öffnen des Kontaktes beschleunigt.

In der DE 199 50 964 A1 ist ein demgegenüber nochmals verbessertes mikromechanisches Relais angegeben, bei dem die Kontaktflächen aus elastischen, reversibel verformbaren Materialbereichen gebildet sind, die derart unter Vorspannung stehen, dass sie sich in kontaktlosem Zustand nach oben, d.h. vom Substrat weg, und bei Aufdrücken des Kontaktbügels nach unten wölben. Durch diese Ausgestaltung kann in Verbindung mit im Bereich der Kontaktflächen nach unten gewölbten Kontaktbügeln ein verbesserter flächiger Kontakt hergestellt werden, der zu einer Verringerung des Kontaktwiderstandes führt.

Aus der DE 197 30 715 C1 ist ein Mikrorelais bekannt, bei dem die Bodenelektrode mit einer aufgerauten oder strukturierten Oberfläche versehen wird, um die bei Berührung von Boden- und Gegenelektrode auftretenden Adhäsionskräfte deutlich zu verringern, die ein Anhaften der Gegenelektrode an der Bodenelektrode verursachen können, das bei Abschalten der elektrischen Spannung anhält.

Die Aufgabe der vorliegenden Erfindung besteht darin, ein mikromechanisches Relais der genannten Art derart weiterzubilden, dass dessen Eigenschaften, insbesondere hinsichtlich des Schaltverhaltens und des Kontaktwiderstandes, weiter verbessert werden.

### Darstellung der Erfindung

Die Aufgabe wird mit dem mikromechanischen Relais gemäß Patentanspruch 1 gelöst. Vorteilhafte Ausgestaltungen des mikromechanischen Relais sind Gegenstand der Unteransprüche.

Das erfindungsgemäße mikromechanische Relais weist in bekannter Weise zumindest ein auf einem Substrat angeordnetes erstes Bodenelektrodengebiet sowie ein über ein Verbindungselement mit dem Substrat verbundenes bewegliches Element mit einem freistehenden Ende, einem ersten Gegenelektrodengebiet und zumindest einem elektrisch leitfähigen Kontaktbügel auf, wobei das erste Gegenelektrodengebiet in einem ersten Bereich zwischen dem Verbindungselement und dem Kontaktbügel ausgebildet ist. Die Elektrodengebiete, das bewegliche Element und der Kontaktbügel sind so angeordnet, dass sich Boden- und Gegenelektrodengebiete gegenüberliegen und das bewegliche Element mit dem Kontaktbügel bei Anlegen einer elektrischen Spannung zwischen Boden- und Gegenelektrodengebiet in Richtung der Bodenelektrode bewegt wird, wodurch der Kontaktbügel auf zwei voneinander beabstandete Kontaktflächen auf dem Substrat gedrückt wird und so eine elektrische Verbindung zwischen den Kontaktflächen herstellt. Der Kontaktbügel ist beim erfindungsgemäßen mikromechanischen Relais in einem Abstand vom freistehenden Ende am beweglichen Element angeordnet, wobei in einem zweiten Bereich zwischen dem Kontaktbügel und dem freistehenden Ende des beweglichen Elementes wenigstens ein zweites Gegenelektrodengebiet und ein diesem gegenüber liegendes zweites Bodenelektrodengebiet ausgebildet ist.

Die Gegenelektrodengebiete können hierbei in bekannter Weise als Schichten am beweglichen Element vorgesehen sein. Weiterhin kann das bewegliche Element selbst die Gegenelektrodengebiete bilden, wobei diese dann gegebenenfalls über ein isolierendes Zwischenstück voneinander elektrisch isoliert sein können. Der Kontaktbügel kann hierbei ebenfalls vollständig aus elektrisch leitfähigem Material gebildet oder lediglich mit einer elektrisch leitfähigen Schicht versehen sein.

Selbstverständlich wird unter Elektrodengebiet in der vorliegenden Anmeldung ein elektrisch leitfähiger Bereich verstanden, der über elektrische Zuführungen angesteuert wird.

Durch die erfindungsgemäße Anordnung des Kontaktbügels und einem zweiten Gegenelektrodengebiet lässt sich ein verbessertes bzw. optimiertes Schalten des Mikrorelais realisieren. Hierzu werden die beiden Gegenelektrodengebiete und/oder deren gegenüberliegende Bodenelektrodengebiete mit unterschiedlichen Spannungsamplituden und/oder zeitversetzt angesteuert. Die Ansteuerung kann hierbei dem dynamischen Biegeverhalten des beweglichen Elementes angepasst werden. Weiterhin lässt sich durch die Anordnung des zweiten Gegenelektrodengebietes vom Einspannungspunkt aus gesehen hinter dem Kontaktbügel ein verbessertes Anpressen des Kontaktbügels an die Kontaktflächen erzeugen, so dass ein besserer Kontakt und damit ein verringerter Kontaktwiderstand resultiert. Beide Verbesserungen wirken sich vorteilhaft auf die Funktionslebensdauer des mikromechanischen Relais aus.

Selbstverständlich lässt sich die Ansteuerung sowohl über die Gegenelektrodengebiete als auch über die Bodenelektrodengebiete realisieren, die ebenfalls getrennt voneinander entsprechend den Gegenelektrodengebieten ausgebildet sein können. Grundsätzlich können erste und zweite Gegenelektrodengebiete auch miteinander elektrisch verbunden und mit einer gemeinsamen Steuerleitung angesteuert werden. Vorteilhaft ist jedoch eine Isolation der beiden Gegenelektrodengebiete voneinander und die Ansteuerung mit getrennten Steuerleitungen.

Das bewegliche Element ist hierbei vorzugsweise in Form eines vom Verbindungselement ausgehenden Biegebalkens mit einem freistehenden Ende ausgebildet (Cantilever-Topologie), der ein oder mehrere den Biegebalken durchdringende Öffnungen aufweist. Diese Öffnungen können beispielsweise durch mehrere parallel zueinander verlaufende Schlitze als Ätzzugangsöffnungen gebildet sein, wie dies aus den eingangs genannten Druckschriften des Standes der Technik bekannt ist. Im Folgenden wird hierbei das erfindungsgemäße Relais ohne Beschränkung des allgemeinen Erfindungsgedankens anhand dieser Biegebalken-Struktur näher erläutert. Selbstverständlich ist es jedoch auch möglich, das bewegliche Element in anderer geeigneter Form, beispielsweise als biegsames Plattenelement, auszugestalten.

Das bewegliche Element des erfindungsgemäßen Mikrorelais weist somit zumindest drei Bereiche auf, von denen ein erster Bereich zwischen dem Einspannpunkt am Verbindungselement und dem Kontaktbügel und ein zweiter Bereich zwischen dem Kontaktbügel und dem freien Ende des beweglichen Elementes vorliegt. Ein dritter Bereich betrifft den Kontaktbügelbereich selbst, der zwischen erstem und zweitem Bereich angeordnet ist. Der Kontaktbügel sitzt beim erfindungsgemäßen Mikrorelais somit nicht wie bei den Relais des bekannten Standes der Technik am freien Ende des Biegebalkens, sondern beabstandet davon. Wesentlich hierbei ist, dass zwischen dem Kontaktbügel und dem freien Ende des Biegebalkens ein weiteres Gegenelektrodengebiet ausgebildet ist, das gegebenenfalls getrennt vom ersten Gegenelektrodengebiet ansteuerbar ist.

Bei einer vorteilhaften Ausführungsform des vorliegenden Mikrorelais erhöht sich die Zahl der Steueranschlüsse für eine externe Ansteuerung des Relais durch die vorliegende Ausgestaltung nicht. Hierzu sind die beiden getrennten Steuerleitungen für die Gegen- oder Bodenelektrodengebiete über eine entsprechende Schaltungsstruktur, beispielsweise RC-Elemente, ein inneres Netzwerk oder eine auf dem Substrat integrierte Halbleiterelektronik, mit einem einzigen externen zweipoligen Anschluss verbunden. Die getrennte Ansteuerung der beiden Gegen- oder Bodenelektrodengebiete wird dabei durch die auf dem Substrat integrierte Schaltungsstruktur realisiert.

In einer weiteren vorteilhaften Ausführungsform des vorliegenden mikromechanischen Relais sind Bereiche der Gegen- und/oder Bodenelektrodengebiete oder Bereiche in deren Umgebung derart ausgebildet, dass sie feine Leitungszüge in Planarspulenform enthalten, deren Magnetfeldrichtung in erster Näherung senkrecht zum Substrat gelegen ist. Bei geeigneter Ansteuerung bzw. Polung des Magnetfeldes dieser Spulen im Bodenelektrodenbereich gegenüber dem Magnetfeld der Spulen im Biegebalkenelement kann eine zum Öffnen des Mikrorelais förderliche magnetische Kraft erzeugt werden. Damit ist der Abschaltvorgang nicht mehr ausschließlich auf die mechanischen Eigenspannungen des Biegebalkens angewiesen. Im Gegensatz dazu erfolgt bei den bekannten Mikrorelais des Standes der Technik das Öffnen des Kontaktes ausschließlich aufgrund der Wechselwirkung aus den schwindenden elektrostatischen Anziehungskräften zwischen den Elektrodengebieten und den mechanischen Eigenspannungen im Biegebalken. Im Betriebsverlauf eines Mikrorelais treten jedoch zum Teil mikroskopisch kleine Verzahnungen bzw. kleine Mikroverschweissungen an den Kontakten auf, die dazu führen können, dass die Eigenspannungen im Biegebalken nicht mehr ausreichen, um den Kontaktbügel von der Kontaktfläche bzw. dem Kontaktpad abzuheben. Kleinere Funktionsstörungen der beschriebenen Art können durch Einwirkung der erfindungsgemäß erzeugten Magnetfelder behoben werden, so dass die gesamte Lebensdauer eines Mikrorelais dadurch zusätzlich verbessert wird.

Selbstverständlich stehen zahlreiche Verfahren zur Verfügung, um ein derartiges Mikrorelais herzustellen. Hierbei wird insbesondere auf das Verfahren verwiesen, das in der DE 196 46 667 beschrieben ist.
Die Steuerleitungen zur Ansteuerung der Gegen-bzw. Bodenelektroden sind vorzugsweise als strukturierte Schichten oder Schichtfolgen auf dem Substrat ausgebildet, wobei Teilgebiete der Steuerleitungszüge und Bereiche dieser Schichten oder Schichtfolgen durch geeignete Kombination von elektrischem Schichtwiderstand und geeigneter geometrischer Formgebung zur Bildung von resistiven und/oder kapazitiven Impedanzen und gegebenenfalls zur Bildung von Impedanznetzwerken ausgebildet sind. Ein derartiges Impedanznetzwerk liegt somit mit dem Mikrorelais integriert auf dem Substrat vor.
Es versteht sich von selbst, dass die geometrische Form der Schaltkreis- bzw. Lastkreisleitungen im Bereich der Kontaktflächen in Abstimmung mit der geometrischen Formgebung insbesondere der Steuerkreis-Bodenelektrodengebiete gewählt werden muss. Vorzugsweise ist der Abstand der jeweils leitfähigen Gebiete zueinander dabei derart ausgebildet, dass die Isolationseigenschaften zwischen Schaltkreis und Steuerkreis angemessen zur Anwendung sind. Gleiches gilt für die Ausbildung der Schaltkreisleitungen beispielsweise im Hinblick auf deren HF-Eigenschaften.

### Kurze Beschreibung der Zeichnungen

Das erfindungsgemäße mikromechanische Relais wird nachfolgend anhand von Ausführungsbeispielen in Verbindung mit den Zeichnungen ohne Beschränkung des allgemeinen Erfindungsgedankens nochmals kurz erläutert. Hierbei zeigen:
- Fig. 1a: ein Beispiel für eine Grundform eines erfindungsgemäßen Mikrorelais mit elektrostatischer Steuerung in einer schnittbildartigen Darstellung in geschlossenem Zustand;
- Fig. 1b: das Mikrorelais der Fig. 1a in geöffnetem Zustand;
- Fig. 2: ein Beispiel für ein erfindungsgemäßes Mikrorelais einschließlich der Steuer- und Schaltkreisleitungen in Draufsicht;
- Fig. 3: ein Beispiel für ein erfindungsgemäßes Mikrorelais mit Steuer- und Schaltkreisleitungen und einem RC-Netzwerk in Draufsicht;
- Fig. 4: ein Beispiel für ein erfindungsgemäßes Mikrorelais mit Steuer- und Schaltkreisleitungen und integrierter Halbleiterelektronik in Draufsicht;
- Fig. 5: ein Beispiel für die Ausgestaltung im Biegebalkenbereich zur Erzeugung eines magnetischen Feldes;
- Fig. 5a: ein weiteres Beispiel für die Ausgestaltung im Biegebalkenbereich zur Erzeugung eines magnetischen Feldes;
- Fig. 6: ein Beispiel eines erfindungsgemäßen Mikrorelais mit Steuer- und Schaltkreisleitungen, bei dem zwei Kontaktbügel vorgesehen sind, in Draufsicht; und
- Fig. 7: eine beispielhafte Anordnung aus zwei erfindungsgemäßen Mikrorelais mit einem gemeinsamen Bodenelektrodengebiet in Draufsicht.

### Wege zur Ausführung der Erfindung

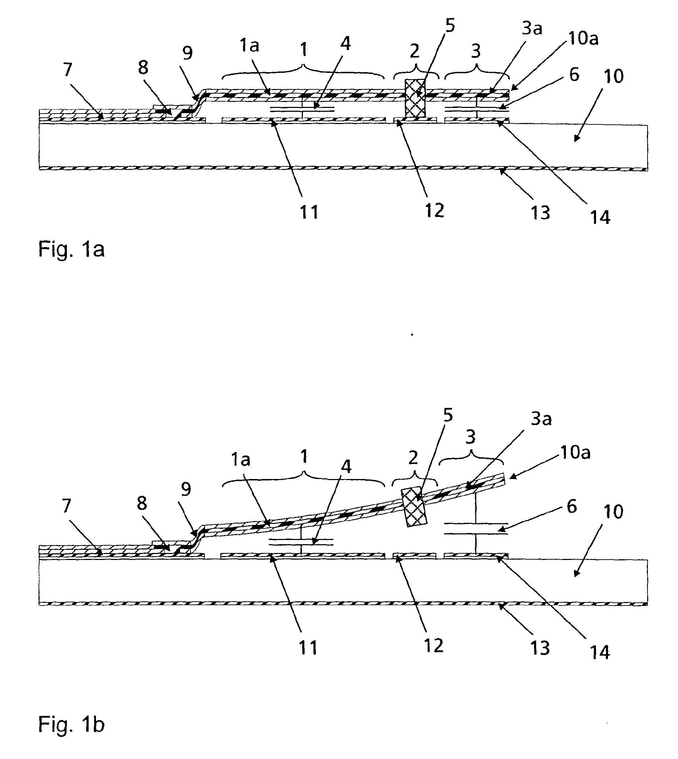

Ein Beispiel für eine Grundform des erfindungsgemäßen Mikrorelais ist in den Fig. 1a und 1b dargestellt. Fig. 1a zeigt hierbei das Mikrorelais in geschlossenem Zustand, bei dem eine elektrisch leitende Verbindung zwischen Kontaktflächen 12 eines Schaltkreises über einen elektrisch leitfähigen Kontaktbügel 5 hergestellt ist. Dieser geschlossene Zustand wird durch eine Steuerspannung zwischen den auf dem Substrat 10 angeordneten Bodenelektrodengebieten 11, 14 und dem als Biegebalkenstruktur ausgestalteten beweglichen Element 10a hergestellt. Die zwischen den jeweiligen Elektroden wirkende elektrostatische Anziehung wird über die in der Figur symbolisch eingezeichneten Kapazitäten 4 bzw. 6 verdeutlicht. Der Schichtaufbau zur Erzeugung des vorliegenden mikromechanischen Relais wird durch geeignete mikromechanische Prozesstechnologie auf einem Substrat 10 mit rückseitiger Metallisierung 13 erzeugt. Der Einspannbereich des einseitig freistehenden Biegebalkens 10a (Cantilever) kann hierbei entweder über eine Stufe oder über einen Sockelbereich (Ankerpad) zum Substrat beabstandet befestigt sein. In der Figur ist hierbei eine entsprechende Stufe 9 zu erkennen. Am Biegebalken 10a befindet sich der leitfähige Kontaktbügel 5, der den niederohmigen Kontakt zwischen den beiden Leitungsteilen 12 eines Last- bzw. Schaltkreises herstellen kann. Wie aus den Fig. 1a und 1b ersichtlich, befindet sich der Verbindungsbügel 5 beim vorliegenden mikromechanischen Relais nicht am freien Ende des Biegebalkens 10a, sondern von diesem freien Ende beabstandet. Der Biegebalken 10a ist somit in drei Bereiche 1, 2, 3 unterteilt, von denen der Kontaktbügel 5 einen Bereich 2 einnimmt. Die Steuerelektroden, d.h. Boden- und Gegenelektroden, zur Ansteuerung des Mikrorelais befinden sich einerseits als Bodenelektrodengebiete 11 und 14 auf der Substratoberfläche und andererseits gegenüberliegend in den Bereichen 1 und 3 des Biegebalkens 10a. Bei Anlegen einer Steuerspannung zwischen Boden- und Gegenelektrodengebieten wird eine elektrostatische Kraft ausgebildet, die geeignet ist, den Biegebalken 10a in Richtung zum Substrat 10 zu bewegen und dabei über den Kontaktbügel 5 den Kontakt zwischen den Schaltkreisleitungen 12 herzustellen.

Die Anschlusspunkte für ein derartiges Mikrorelais sind durch zwei Anschlüsse für die Eingangs- und Ausgangsseite des Schaltkreises sowie durch zwei oder vier Anschlüsse für die zwei bzw. vier Potentiale des Steuerkreises gegeben.

Fig. 1b zeigt das Mikrorelais der Fig. 1a im steuerspannungslosen Zustand. In diesem Zustand weisen die freien Enden der Biegebalken 10a aufgrund der herstellungsbedingten Eigenspannung vom Substrat 10 weg.

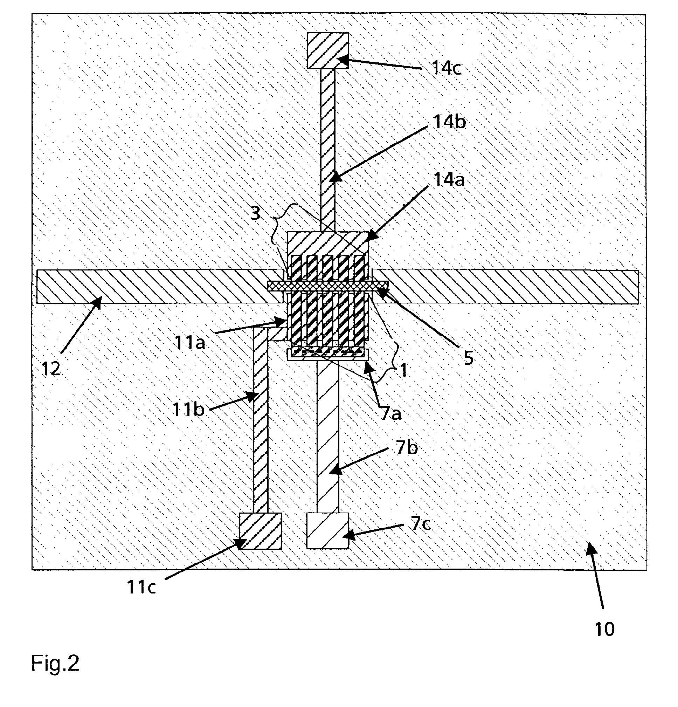

Fig. 2 zeigt ein Beispiel für ein erfindungsgemäßes Mikrorelais, wie dies in den Fig. 1a und 1b in Schnittansicht dargestellt wurde, in Draufsicht. Hierbei ist wiederum das Substrat 10 zu erkennen, auf dem die Kontaktflächen 12 für den Schaltkreis, Steueranschlüsse 7c, 11c und 14c sowie Anschlussleitungen 7b, 11b und 14b für die Boden- und Gegenelektrodengebiete dargestellt sind. Die Bodenelektrodengebiete haben in diesem Beispiel die Bezugszeichen 11a und 14a erhalten. Das Bezugszeichen 7a bezeichnet den Übergangsbereich zwischen dem leitfähigen Material der Steuerleitung 7b und dem leitfähigen Material der Gegenelektrode mit einer Reihe von Kontaktstellen, die in Fig. 1a und Fig. 1b mit dem Bezugszeichen 8 versehen sind.
In dieser Darstellung ist als bewegliches Element ein Biegebalken 10a mit vier länglich ausgebildeten Ätzzugangsöffnungen zu erkennen. Der Biegebalken 10a trägt den Kontaktbügel 5. Die Ätzzugangsöffnungen erlauben im Herstellungsverfahren den Angriff des Ätzmediums am Opferschichtmaterial, das sich in einer Zwischenphase des Herstellungsablaufs zwischen Bodenelektrode und Biegebalken befindet. Der Bereich 1 für das erste Gegenelektrodengebiet 1a erstreckt sich zwischen dem Verbindungselement 9 zur Verbindung des Biegebalkens 10a mit dem Substrat 10 bis zum Kontaktbügel 5. An der Oberfläche des Substrates 10 selbst ist in diesem Bereich das entsprechende Bodenelektrodengebiet 11a ausgebildet. Der Bereich 3 des Gegenelektrodengebietes 3a erstreckt sich vom Kontaktbügel 5 bis zum freien Ende des Biegebalkens 10a. Diesem gegenüberliegend ist wiederum auf der Substratoberfläche das Bodenelektrodengebiet 14a ausgebildet.

Prinzipiell kann das Gegenelektrodengebiet 1a im Bereich 1 und das Gegenelektrodengebiet 3a im Bereich 3 örtlich kurzgeschlossen sein oder nicht, wobei Implementierungen mit kurzgeschlossenen Gebieten 1a und 3a durch die einfachere Strukturierung des leitenden Materials von Vorteil sind. Das Bodenelektrodengebiet 11 im Bereich 1 kann örtlich kurzgeschlossen mit dem Bodenelektrodengebiet 14 im Bereich 3 sein oder nicht. Vorteilhaft ist, wenn die vorhandenen Bodenelektrodengebiete 11 und 14 getrennte Zuführungen von Steuersignalen (Steuerkreisleitungen 7b und 14b) aufweisen, so dass bedarfsweise eine getrennte Ansteuerung dieser Bodenelektrodengebiete erfolgen kann. Diese erfindungsgemäße Topologie erlaubt eine zeitlich versetzte und/oder in der Amplitude gestufte Ansteuerung zwischen den Steuerelektroden 1a, 11 im Bereich 1 und den Steuerelektroden 3a und 14a im Bereich 2. Durch geeignete Integration von RC-Elementen auf dem Substrat 10 kann gegebenenfalls der äußere Steuersignalaufwand auf das Niveau bisher bekannter Mikrorelais gesenkt werden. Aus einem einzigen äußeren Signal am Ansteuerzweipol des Mikrorelaisbauelements wird durch innere Netzwerke eine abgestufte Ansteuerung der Steuerelektroden erzeugt. Ein Separieren von Einschaltsignalform und Abschaltsignalform kann desweiteren gegebenenfalls ohne zusätzliche externe Anschlusspunkte durch die Integration von Transistoren bzw. Dioden auf dem Substrat 10 erreicht werden. Die erforderliche Schaltstruktur kann hierbei gegebenenfalls monolithisch in bzw. auf dem Substrat 10 integriert werden.

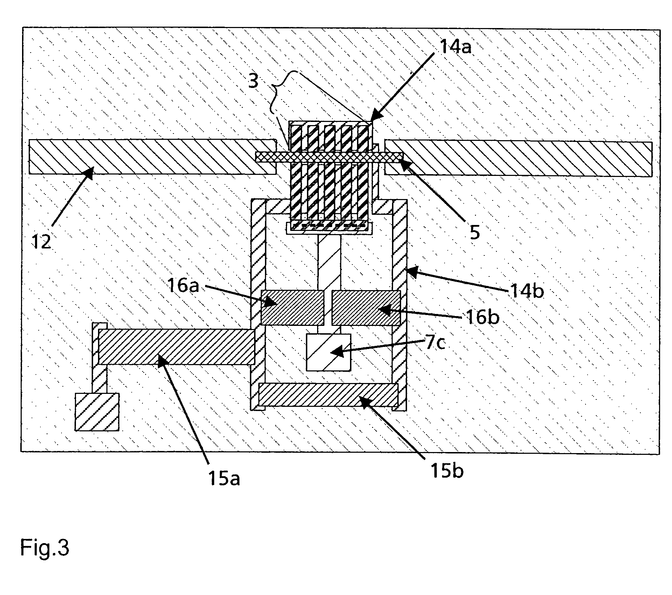

Fig. 3 zeigt hierbei als Beispiel eine Implementierung eines RC-Netzwerkes auf dem das Mikrorelais tragenden Substrat 10. Hierbei ist das bewegliche Element 10a mit den entsprechenden Steuerelektroden 1a, 3a, 11, 14, dem Kontaktbügel 5 und den Kontaktflächen 12 des Schaltkreises wiederum ausgestaltet wie bei den vorliegenden Figuren. In diesem Falle sind jedoch nur zwei Anschlüsse 11c und 7c für die Steuerelektroden vorgesehen, die über die Impedanzen 15a, 15b, 16a, 16b miteinander verbunden sind. Auf diese Weise lässt sich eine Ansteuerung des Mikrorelais lediglich über die zwei Anschlüsse 11c und 7c realisieren, wobei das integrierte Netzwerk geeignete Steuersignalverläufe hervorruft.

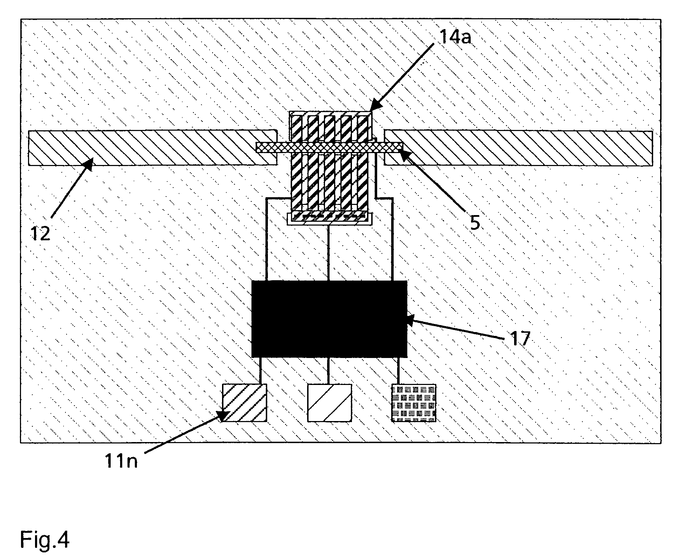

Fig. 4 zeigt eine Ausführungsform eines erfindungsgemäßen Mikrorelais ähnlich der der Fig. 3, bei der jedoch anstatt einer RC-Schaltstruktur eine Halbleiterelektronik 17 auf dem Substrat 10 des Mikrorelais integriert ist. Die Halbleiterelektronik 17 kann gegebenenfalls über die symbolisierte Leitungsführung hinaus sowohl der Ansteuerung als auch der Funktionskontrolle des Mikrorelais dienen. Eine Rückkopplung zwischen Ansteuerung und Funktionskontrolle, die durch eine derartig integrierte Elektronik möglich wird, erlaubt die Regelung bzw. Nachführung der Ansteuerung an den momentanen Betriebszustand des Mikrorelais. Einer der wichtigsten Kenngrößen des Betriebszustands ist der Kontaktwiderstand, der durch insitu-Messung und Nachführung der Ansteuerung von Schaltvorgang zu Schaltvorgang innerhalb von Toleranzgrenzen gehalten werden kann. Der weitere Anschluss 11n dieser Struktur repräsentiert sinnbildlich Optionen von Ausbildungsformen, bei denen z.B. ein Statussignal, ein Fehlermeldungssignal oder zusätzliche Ansteuerinformationen mit der Halbleiterelektronik 17 ausgetauscht werden können.

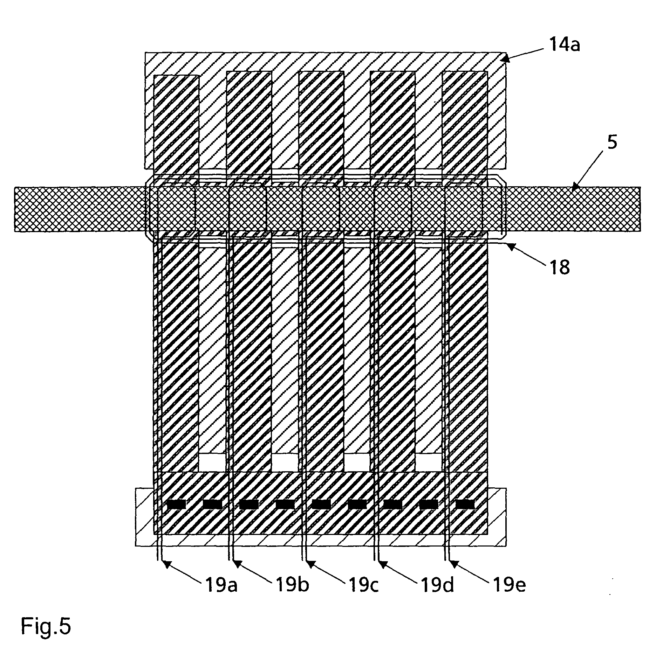

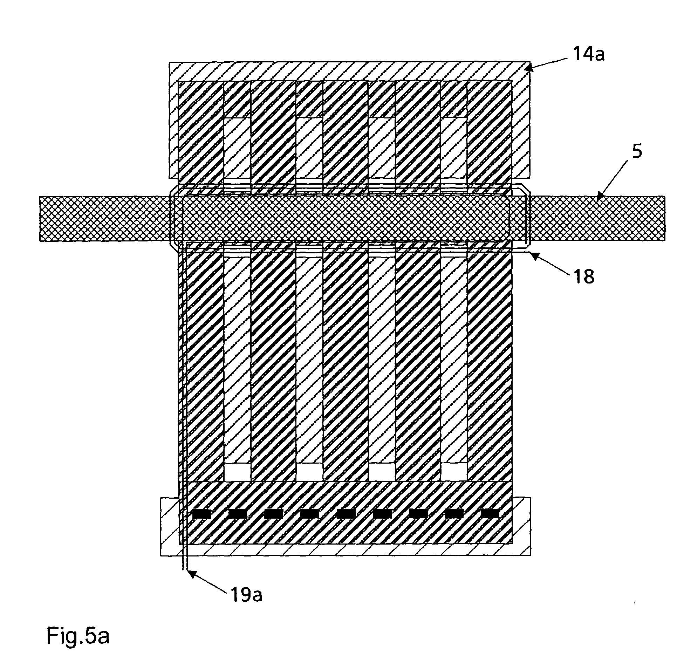

Eine weitere erfindungsgemäße Weiterbildung eines Mikrorelais mit spezieller Steuerelektroden-Topologie besteht in der Verbesserung des Ausschaltvorgangs durch Magnetfeldkräfte. Die erfindungsgemäße Weiterbildung enthält in der Umgebung der Steuerelektrodengebiete 1a, 3a, 11, 14 Teilgebiete, in denen feine Leitungszüge 18 bzw. 19a - 19e derart eingefügt sind, dass sich so genannte Planarspulen mit Magnetfeldrichtung in erster Näherung senkrecht zum Substrat 10 ergeben. Eine derartige Ausgestaltung am Biegebalken 10a bzw. auf dem Substrat 10 ist schematisch in den Figuren 5 und 5a angedeutet. Hierbei sind auf dem Substrat durch entsprechend feine Leitungszüge 18 eine Planarspule sowie am Biegebalken durch entsprechend feine Leitungszüge 19a - 19e ein oder mehrere weitere Planarspulen ausgebildet. Bei geeigneter Ansteuerung bzw. Polung des Magnetfeldes der Spule im Bodenelektrodenbereich gegenüber dem Magnetfeld der Spulen im Biegebalken kann eine zum Öffnen des Mikrorelais förderliche magnetische Kraft erzeugt werden. Der Abschaltvorgang ist damit nicht nur ausschließlich auf die mechanischen Eigenspannungen des Biegeelementes angewiesen.

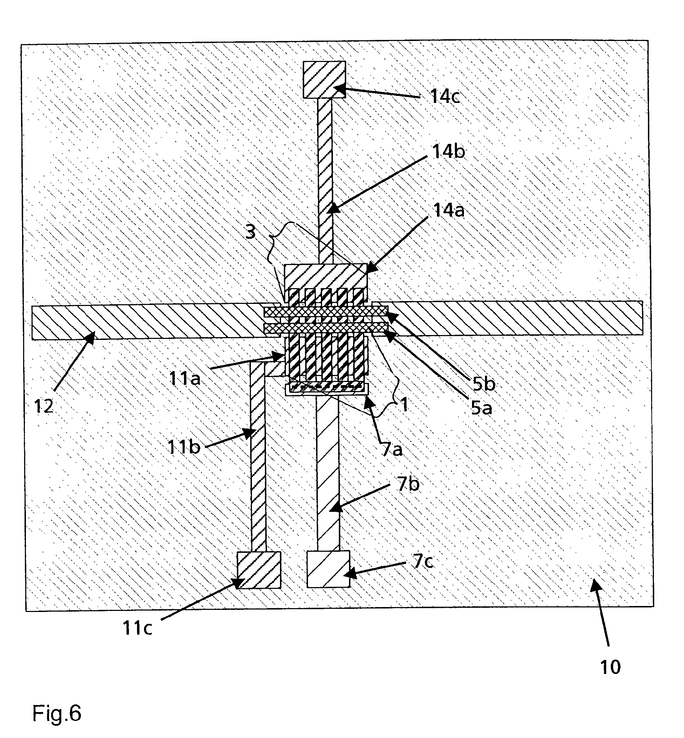

Eine weitere Ausführungsform eines erfindungsgemäßen Mikrorelais, bei der ein Doppel-Kontaktbügel 5a, 5b eingesetzt wird, ist in Fig. 6 zu erkennen. Die beiden Kontaktbügel 5a, 5b sind hierbei beabstandet zueinander am Biegebalken 10a angeordnet. Selbstverständlich lassen sich auch mehr als zwei dieser Kontaktbügel nebeneinander vorsehen. Bei der in diesem Ausführungsbeispiel dargestellten Ausführungsform weisen die beiden Kontaktbügel einen relativ geringen Abstand zueinander und damit entsprechend kleine Ätzzugangsöffnungen für die herstellungstechnologische Entfernung der Opferschicht auf. Selbstverständlich lassen sich zwischen den einzelnen Kontaktbügeln 5a, 5b ebenfalls weitere Gegenelektrodengebiete ausbilden, die ein entsprechendes Gegenstück am Substrat haben. Auch diese weiteren Steuerelektroden können unabhängig von den restlichen Steuerelektroden ansteuerbar ausgestaltet sein. Die Steuerung erfolgt hierbei der mechanischen Sequenz des Schließens folgend beginnend von der Seite der Einspannung und endend mit dem freien Ende des Biegebalkens, wie auch bei Vorhandensein von lediglich zwei Gegenelektrodengebieten 1a, 3a.

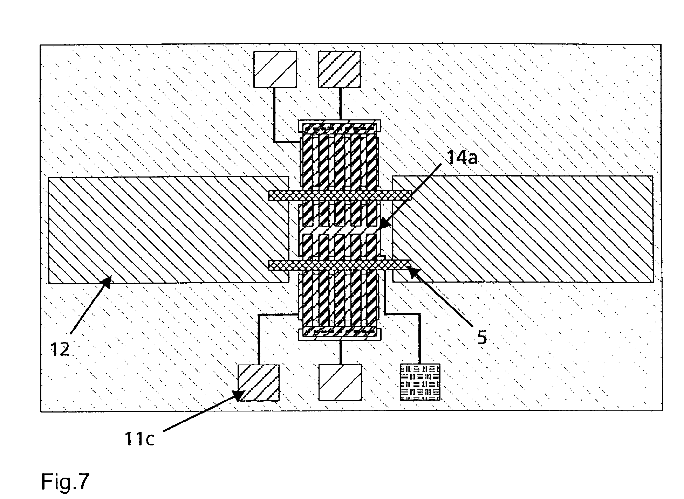

Fig. 7 zeigt schließlich ein Mikrorelais, das sich aus zwei voneinander unabhängigen beweglichen Biegebalkenstrukturen 10a zusammensetzt, deren freie Enden einander zugewandt angeordnet sind. Die Kontaktbügel 5 dieser beiden beweglichen Elemente schließen hierbei einen gemeinsamen Schaltkreis 12. Ein Vorteil dieser Anordnung besteht insbesondere darin, dass zumindest ein elektrisch gemeinsamer Bodenelektrodenbereich 14a vorgesehen sein kann, der den Gegenelektroden 3a der beiden beweglichen Elemente gegenüberliegt. Durch eine gemeinsame Steuerleitung dieses Elektrodengebietes 14a kann die Gesamtanordnung der zwei beweglichen Elemente funktional ein einziges Mikrorelais zum Schalten von Signalen bilden. Auch eine Zusammenführung der Steuerpfade für die Steuerelektrodenbereiche 1 der beiden beweglichen Elemente kann weiterhin im Sinne einer minimalen Gesamtbauelement-Anschlusskonfiguration von Vorteil sein.

Die vorangehend erläuterten einzelnen Ausführungsbeispiele betreffen jeweils besondere Ausgestaltungen einzelner Merkmale des erfindungsgemäßen Mikrorelais, die selbstverständlich auch frei miteinander kombinierbar sind. Weiterhin lässt sich das vorliegende Mikrorelais auch durch Maßnahmen weiter kombinieren, wie sie beispielsweise aus der DE 199 50 964 A1 bekannt sind. Die Ausgestaltungsformen dieses Mikrorelais werden in die vorliegende Patentanmeldung einbezogen.
So können die Berührungsflächen der Bodenelektrodengebiete mit den gegenüberliegenden Gegenelektrodengebieten in eingeschaltetem Zustand des Mikrorelais durch Herstellungsschritte wie flächiges Anätzen und/oder durch strukturiertes Ätzen der Schichten verringert werden. Weiterhin können die Bodenelektrodenflächen in Richtung des freien Endes der Biegebalken abnehmen.

Die Formgebung der Kontaktflächen der Schaltkreisleitungen 12 kann durch die Herstellung derart ausgebildet werden, dass diese elastische Eigenschaften aufweisen. Hierzu wird in mindestens zwei Randbereichen der Kontaktflächen bei deren Herstellung über die Stufe der Opferschicht hinweg eine Verbindung unmittelbar mit dem Substrat oder mittelbar durch Zwischenschichten, die auf dem Substrat aufgebracht sind, hergestellt, so dass nach dem Entfernen der Opferschicht im Zuge der Gesamtherstellungsvorgänge insbesondere unterhalb der Kontaktflächenbereiche, in denen der Kontaktbügel aufsetzt, ein Hohlraum und somit ein federnder Kontaktflächenbereich entsteht.

Weiterhin kann der Kontaktbügel unter einer Eigenzugspannung stehen, durch die er im Kontaktbereich mit den Kontaktflächen eine nach unten gewölbte Form erhält. Der Kontaktbügel kann auch mit einer Eigendruckspannungsschicht zur zumindest teilweisen Kompensation der Eigenzugspannung ausserhalb des Kontaktbereiches versehen sein. Weiterhin kann diese Eigendruckspannungsschicht im Verlauf längs des Kontaktbügels wenigstens einmal unterbrochen sein, um eine Verwölbung des Kontaktbügels im Bereich des Biegebalkengebiets zwischen den Kontaktflächen zu verringern.
Schließlich können die Ätzzugangsöffnungen der Biegebalkenanordnung zwischen den Einzelbalken der Biegebalkenanordnung an den Stellen des Überganges zum Kontaktbügelbereich und/oder dem Einspannbereich hinsichtlich ihrer Formgebung (in Draufsicht bzw. in einer Ebene parallel zur Substratoberfläche) abgerundet sein.

### BEZUGSZEICHENLISTE

- 1: erster Bereich des beweglichen Elementes
- 1a: erstes Gegenelektrodengebiet
- 2: dritter Bereich des beweglichen Elementes
- 3: zweiter Bereich des beweglichen Elementes
- 3a: zweites Gegenelektrodegebiet
- 4: Kapazität im ersten Steuerelektrodenbereich
- 5: Kontaktbügel
- 6: Kapazität im zweiten Steuerelektrodenbereich
- 7: Steuerleitung
- 7a: Gebiet zur Fixierung des Biegebalkens auf dem Substrat und zur Verbindung der leitenden Materialien der Gegenelektrode mit dem der Steuerleitung
- 7b: Zuleitung zu den Gegenelektrodengebieten
- 7c: Anschlusspad für Zuleitung
- 8: Kontaktstelle zwischen dem leitenden Material der Gegenelektrode mit dem der Steuerleitung
- 9: Verbindungselement
- 10: Substrat
- 10a: bewegliches Element, Biegebalken
- 11: Bodenelektrodengebiet im ersten Bereich
- 11a: Bodenelektrode im ersten Bereich
- 11b: Zuleitung zur Bodenelektrode
- 11c: Anschlusspad für Bodenelektrode
- 11n: Zusatzanschluss für Signalaustausch mit der Halbleiterelektronik
- 12: Kontaktflächen des Schaltkreises
- 13: Metallisierung
- 14: Bodenelektrodengebiet im zweiten Bereich
- 14a: Bodenelektrode im zweiten Bereich
- 14b: Zuleitung zur Bodenelektrode
- 14c: Anschlusspad für Bodenelektrode
- 15a: Impedanzbauelement z.B. für RC-Netzwerk und/oder z.B. Diode
- 15b: Impedanzbauelement z.B. für RC-Netzwerk und/oder z.B. Diode
- 16a: Impedanzbauelement z.B. für RC-Netzwerk und/oder z.B. Diode
- 16b: Impedanzbauelement z.B. für RC-Netzwerk und/oder z.B. Diode
- 17: Halbleiterelektronik
- 18: Planarspule im Bodenelektrodenbereich
- 19a-e: Planarspulen im Biegebalkenbereich

## Patentansprüche

1. Mikromechanisches Relais mit
- zumindest einem auf einem Substrat (10) angeordneten ersten Bodenelektrodengebiet (11);
- einem einseitig über ein Verbindungselement (9) mit dem Substrat (10) verbundenen beweglichen Element (10a) mit einem freistehenden Ende, einem ersten Gegenelektrodengebiet (1a) und zumindest einem elektrisch leitfähigen Kontaktbügel (5), wobei das erste Gegenelektrodengebiet (1a) in einem ersten Bereich (1) zwischen dem Verbindungselement (9) und dem Kontaktbügel (5) ausgebildet ist; und
- zwei über einen Spalt voneinander beabstandeten Kontaktflächen (12) auf dem Substrat (10);
wobei die Elektrodengebiete (1a, 11), das bewegliche Element (10a) und der Kontaktbügel (5) so angeordnet sind, dass sich Boden- und Gegenelektrodengebiet gegenüberliegen und das bewegliche Element (10a) mit dem Kontaktbügel (5) bei Anlegen einer elektrischen Spannung zwischen Boden- und Gegenelektrodengebiet in Richtung des Bodenelektrodengebietes (11) bewegt wird, wodurch der Kontaktbügel (5) auf die Kontaktflächen (12) gedrückt wird und so eine elektrische Verbindung zwischen den Kontaktflächen (12) herstellt,
**dadurch gekennzeichnet,**
**dass** der Kontaktbügel (5) in einem Abstand vom freistehenden Ende am beweglichen Element (10a) angeordnet ist und in einem zweiten Bereich (3) zwischen dem Kontaktbügel (5) und dem freistehenden Ende des beweglichen Elementes (10a) wenigstens ein zweites Gegenelektrodengebiet (3a) und ein diesem gegenüberliegendes zweites Bodenelektrodengebiet (14) ausgebildet ist.

2. Mikromechanisches Relais nach Anspruch 1,
**dadurch gekennzeichnet,**
**dass** erstes und zweites Gegenelektrodengebiet (1a, 3a) und/oder diesen gegenüberliegende Bodenelektrodengebiete (11, 14) voneinander isoliert und mit getrennten Steuerleitungen (11b, 14b) verbunden sind.

3. Mikromechanisches Relais nach Anspruch 2,
**dadurch gekennzeichnet,**
**dass** die beiden getrennten Steuerleitungen (11b, 14b) über eine Schaltungsstruktur (15a/b, 16 a/b, 17) auf dem Substrat (10) mit einem gemeinsamen Steueranschluss (11c) verbunden sind.

4. Mikromechanisches Relais nach Anspruch 3,
**dadurch gekennzeichnet,**
**dass** die Schaltungsstruktur (15a/b, 16 a/b, 17) Mittel zu einer hinsichtlich der Amplitude abgestuften Ansteuerung und/oder zu einer zeitlich versetzten Ansteuerung der beiden Gegenelektrodengebiete (1a, 3a) oder der diesen gegenüberliegenden Bodenelektrodengebiete (11, 14) bei Anliegen eines Steuersignals am Steueranschluss aufweist.

5. Mikromechanisches Relais nach Anspruch 4,
**dadurch gekennzeichnet,**
**dass** die Schaltungsstruktur (15a/b, 16 a/b, 17) weiterhin Mittel zur Funktionsüberwachung und gegebenenfalls Nachführung des Schaltvorganges aufweist.

6. Mikromechanisches Relais nach Anspruch 5,
**dadurch gekennzeichnet,**
**dass** die Mittel eine Einheit zur Messung des Kontaktwiderstandes bei geschlossenem Relaiskontakt beinhalten.

7. Mikromechanisches Relais nach einem der Ansprüche 3 bis 6,
**dadurch gekennzeichnet,**
**dass** die Schaltungsstruktur (15a/b, 16 a/b, 17) monolithisch in das bzw. auf dem Substrat (10) integriert ist.

8. Mikromechanisches Relais nach einem der Ansprüche 1 bis 7,
**dadurch gekennzeichnet,**
**dass** die Elektrodengebiete (1a, 3a, 11, 14) oder deren Umgebung Teilbereiche mit feinen Leitungszügen (18, 19a-e) aufweisen, die Planarspulen zur Erzeugung eines Magnetfeldes annähernd senkrecht zur Oberfläche des Substrates (10) ausbilden.

9. Mikromechanisches Relais nach einem der Ansprüche 1 bis 8,
**dadurch gekennzeichnet,**
**dass** das bewegliche Element (10a) in Form eines vom Verbindungselement (9) ausgehenden Biegebalkens ausgebildet ist, der ein oder mehrere den Biegebalken durchdringende Öffnungen aufweist.

10. Mikromechanisches Relais nach Anspruch 9,
**dadurch gekennzeichnet,**
**dass** Übergangsbereiche des Biegebalkens zu dem Kontaktbügel (5) und/oder dem Verbindungselement (9) abgerundet oder abgeschrägt sind.

11. Mikromechanisches Relais nach einem der Ansprüche 1 bis 10,
**dadurch gekennzeichnet,**
**dass** mehrere voneinander beabstandete Kontaktbügel (5) vorgesehen sind.

12. Mikromechanisches Relais nach einem der Ansprüche 1 bis 11,
**dadurch gekennzeichnet,**
**dass** der Kontaktbügel (5) unter einer Eigenzugspannung steht, durch die er im Kontaktbereich mit den Kontaktflächen (12) eine nach unten gewölbte Form erhält.

13. Mikromechanisches Relais nach Anspruch 12,
**dadurch gekennzeichnet,**
**dass** die Kontaktflächen (12) durch elastische, reversibel verformbare Materialbereiche über einem Hohlraum gebildet sind, die sich bei Aufdrücken des Kontaktbügels (5) nach unten wölben.

14. Mikromechanisches Relais nach Anspruch 12 oder 13,
**dadurch gekennzeichnet,**
**dass** der Kontaktbügel (5) mit einer Eigendruckspannungsschicht zur zumindest teilweisen Kompensation der Eigenzugspannung außerhalb des Kontaktbereiches versehen ist.

15. Mikromechanisches Relais nach Anspruch 14,
**dadurch gekennzeichnet,**
**dass** die Eigendruckspannungsschicht über eine Länge des Kontaktbügels (5) zumindest einmal örtlich unterbrochen ist, um eine Verwölbung des Kontaktbügels in Bereichen zwischen den Kontaktflächen (12) zu verhindern.

16. Mikromechanisches Relais nach einem der Ansprüche 1 bis 15,
**dadurch gekennzeichnet,**
**dass** die Boden- und/oder die Gegenelektrodengebiete (1a, 3a, 11, 14) bzw. darauf aufgebrachte Schichten eine gegenüber einer bei der Herstellung zwangsläufig auftretenden Topographie zusätzlich eingebrachte Oberflächenstruktur mit Erhebungen und Vertiefungen aufweisen, die ein Anhaften des beweglichen Elementes (10a) an Bodenelektrodengebieten bei Berührung verhindert.

17. Mikromechanisches Relais nach einem der Ansprüche 1 bis 16,
bei dem ein zweites mit dem Substrat (10) verbundenes bewegliches Element mit einem freistehenden Ende, ersten und zweiten Gegenelektrodengebieten (1a) und zumindest einem elektrisch leitfähigen Kontaktbügel (5) derart zum ersten beweglichen Element (10a) angeordnet ist, dass die beiden freistehenden Enden einander zugewandt sind, um mit ihren Kontaktbügeln (5) eine elektrische Verbindung zwischen den gleichen Kontaktflächen (12) zu öffnen oder zu schließen, wobei die zweiten Gegenelektrodengebiete (3a) einem gemeinsamen Bodenelektrodengebiet (14a) gegenüberliegen und die ersten und zweiten Gegenelektrodengebiete (1a, 3a) gemeinsam ansteuerbar sind.
